# FASCICULE DE BREVET EUROPEEN

(11) **EP 3 935 023 B1**
(45) Date de publication et mention de la délivrance du brevet: **08.05.2024**
(21) Numéro de dépôt: 20707299.2
(22) Date de dépôt: 06.03.2020
(51) Int. Cl.: C03C 17/36, B32B 17/06

(54) **ARTICLE EN VERRE FEUILLETE COLORE**
GEFÄRBTER LAMINIERTER GLASARTIKEL
COLOURED LAMINATED GLASS ARTICLE

(30) Priorité: 08.03.2019 FR 1902364
(43) Date de publication de la demande: 12.01.2022
(73) Titulaire: Saint-Gobain Glass France, 92400 Courbevoie (FR)
(72) Inventeur: MARIANI, Silvia, 93310 LE PRE SAINT-GERVAIS (FR)
(74) Mandataire: Saint-Gobain Recherche
(86) Numéro de dépôt international: PCT/EP2020/056068
(87) Numéro de publication internationale: WO 2020/182676

(56) Documents cités:
- WO-A1-03/095385
- US-A- 4 017 661
- US-A1- 2004 247 929
- US-B2- 8 231 977

## Description

L'invention se rapporte au domaine des articles en verre transparents et colorés, en particulier utilisés à l'intérieur des habitations, par exemple comme éléments d'ameublement ou de décoration intérieure.

Différent moyens d'obtention d'articles en verre colorés sont connus. Il est par exemple connu de teinter le verre durant sa fabrication en ajoutant au mélange vitrifiable des espèces minérales colorantes telles que des oxydes de métaux de transition (fer, cobalt, cuivre, nickel, chrome, vanadium). Ces techniques ne sont toutefois pas rentables en cas de productions en petite série car les temps de transition entre teintes peuvent atteindre plusieurs jours sur les fours verriers de grande taille utilisés pour la production de verre plat. Le nombre de teintes possibles est en outre limité. Il est également connu de feuilleter des feuilles de verre incolores au moyen d'un intercalaire de feuilletage coloré. Ces derniers sont toutefois très coûteux. La demande WO 2018/115768 décrit un procédé dans lequel l'intercalaire de feuilletage, initialement incolore, est teinté durant l'étape de feuilletage du fait de la migration d'agents colorants. Le document WO 03/095385 décrit un vitrage feuilleté pour automobile. Le document US 4,017,661 décrit aussi un vitrage feuilleté.

L'invention a pour but de proposer un article en verre transparent et coloré pouvant présenter une grande variété de teintes pour un faible coût de production. D'un point de vue optique, l'invention a aussi pour but de proposer un article présentant une couleur en transmission qui ne soit pas trop impactée par des réflexions colorées parasites. L'article doit également présenter un aspect symétrique, c'est-à-dire un aspect sensiblement identique quel que soit le côté duquel il est observé.

A cet effet, l'invention a pour objet un article en verre feuilleté transparent coloré comprenant une première feuille de verre liée adhésivement à une deuxième feuille de verre au moyen d'un intercalaire de feuilletage, ladite première feuille de verre étant revêtue sur sa face en contact avec ledit intercalaire de feuilletage d'un seul empilement de couches minces, ledit empilement comprenant, successivement depuis ladite face, une couche métallique discontinue à base d'argent ou à base d'aluminium puis, en contact avec ladite couche métallique discontinue, une surcouche diélectrique.

L'invention a aussi pour objet un procédé d'obtention d'un article en verre feuilleté transparent coloré selon l'invention, comprenant les étapes successives suivantes :
- la fourniture d'une première feuille de verre dont une face est revêtue d'un seul empilement de couches minces, ledit empilement comprenant, successivement depuis ladite face, une couche métallique discontinue à base d'argent ou à base d'aluminium puis, en contact avec ladite couche métallique discontinue, une surcouche diélectrique, puis
- une étape de feuilletage, dans laquelle la première feuille de verre est liée adhésivement à une deuxième feuille de verre au moyen d'un intercalaire de feuilletage, de sorte que ledit empilement de couches minces soit en contact avec ledit intercalaire de feuilletage.

Comme expliqué plus en détail dans la suite du texte, l'empilement de couches minces permet de conférer une coloration en transmission à la fois homogène et reproductible que l'on peut régler finement en modifiant les caractéristiques de l'empilement, notamment l'épaisseur de la couche métallique et la nature de la surcouche diélectrique. Il a en outre été observé que le fait de disposer l'empilement de couches minces à l'intérieur d'un vitrage feuilleté permettait d'obtenir un aspect (notamment une teinte) en réflexion symétrique, c'est-à-dire sensiblement identique quelque que soit le côté duquel l'article en verre feuilleté est observé. La présence d'une deuxième feuille de verre feuilletée avec la première permet en outre de réduire la teinte en réflexion et donc d'améliorer l'aspect de l'article. Sans la présence de la deuxième feuille de verre et de l'intercalaire de feuilletage, la première feuille de verre revêtue de l'empilement présente une teinte en réflexion soutenue, en outre différente de la teinte en transmission et très dépendante du côté d'observation.

Les feuilles de verre sont de préférence planes. Elles peuvent alternativement être bombées. L'épaisseur de chacune des feuilles de verre est de préférence comprise dans un domaine allant de 0,7 à 19 mm, notamment de 2 à 6 mm. La surface des feuilles de verre est de préférence d'au moins 0,5 m², notamment d'au moins 1 m², voire d'au moins 2 m².

Les feuilles de verre sont de préférence en verre silico-sodo-calcique. D'autres compositions de verre, par exemple des borosilicates ou des aluminosilicates peuvent toutefois être utilisées. Les feuilles de verre sont de préférence obtenues par flottage.

Pour ne pas influer sur la coloration du verre feuilleté, les feuilles de verre sont de préférence incolores, c'est-à-dire en verre clair ou extra-clair. La teneur pondérale en oxyde de fer des feuilles de verre est alors de préférence comprise dans un domaine allant de 0,005% à 0,15%, notamment de 0,01% à 0,12%, voire de 0,03 à 0,10%, et la feuille de verre ne comprend pas d'autres agents colorants que l'oxyde de fer. Alternativement, au moins une (voire chacune) des feuilles de verre peut être teintée, par exemple en vert, bleu, gris ou bronze. Cette alternative n'est donc pas exclue, mais elle n'est toutefois pas préférée, car l'on préfère régler la couleur du verre feuilleté uniquement à l'aide de l'empilement de couches minces.

L'intercalaire de feuilletage est typiquement à base de résine, en particulier thermoplastique. L'intercalaire de feuilletage est de préférence en polyvinylacétal, notamment en polyvinylbutyral (PVB). D'autres résines sont possibles, telles que les copolymères d'éthylène et d'acétate de vinyle (EVA) ou le polyuréthane. L'intercalaire de feuilletage présente de préférence une épaisseur comprise entre 0,1 et 10 mm, notamment entre 0,2 et 5 mm, voire entre 0,3 et 3 mm, et même entre 0,5 et 2 mm. L'intercalaire de feuilletage peut comprendre plusieurs plis, par exemple deux plis de PVB de de 0,38 mm d'épaisseur, pour une épaisseur totale de 0,76 mm.

L'intercalaire de feuilletage est de préférence incolore, toujours parce que l'on préfère régler la couleur du verre feuilleté uniquement à l'aide de l'empilement de couches minces. Il n'est toutefois pas exclu d'utiliser des intercalaires de feuilletage colorés afin de conférer des aspects optiques particuliers.

De préférence toutefois, les feuilles de verre et l'intercalaire de feuilletage sont incolores.

La face de la première feuille de verre en contact avec l'intercalaire de feuilletage est revêtue d'un seul empilement de couches minces. Par conséquent, la totalité des couches minces déposées sur cette face ne forme qu'un seul empilement.

De préférence l'empilement ne comprend qu'une seule couche métallique, qui est donc discontinue et à base d'argent ou à base d'aluminium. Il ne comprend dans ce cas pas d'autre couche métallique, de quelque sorte que ce soit, et en particulier pas d'autre couche métallique à base d'argent ou d'aluminium, qu'elle soit discontinue ou continue.

L'empilement de couches minces est de préférence déposé par pulvérisation cathodique, en particulier assistée par champ magnétique (procédé magnétron). Pour ce faire, un substrat de verre plan défile, dans une enceinte de dépôt sous vide contenant un gaz plasmagène, en regard de cibles. Soit la première feuille de verre correspond à ce substrat, soit, plus généralement, elle est obtenue à partir de ce substrat, en général par des opérations de découpe, voire de bombage. Le procédé selon l'invention peut donc comprendre en préalable une étape de dépôt par pulvérisation cathodique de l'empilement sur un substrat de verre, puis, optionnellement une étape de découpe dudit substrat afin d'obtenir la première feuille de verre.

Par l'expression « à base de », on entend que la couche considérée comprend au moins 50% en poids du matériau considéré. Cette teneur est de préférence d'au moins 60%, notamment 70% et même 80% ou 90%, voire 95% ou 99%. La couche considéré est de préférence essentiellement constituée ou constituée de ce matériau.

En particulier, la couche métallique discontinue est de préférence constituée d'argent. Alternativement, mais de manière moins préférée, elle peut être en un alliage d'argent et d'au moins un autre métal.

La couche métallique discontinue est normalement discontinue sur la totalité de la surface de l'article, de manière à assurer une couleur uniforme.

La couche métallique discontinue recouvre de préférence au moins 50% de la surface sur laquelle elle est déposée. Ce taux d'occupation surfacique est de préférence d'au plus 95% et même 90% et/ou d'au moins 60%.

La couche métallique discontinue se présente généralement sous la forme de particules (ou sous forme d'amas ou d'îlots métalliques) isolées ou au contraire connectées entre elles. Même lorsqu'ils sont connectés entre eux, les particules, amas ou îlots, sont assemblés de manière à ménager des zones non revêtues, c'est-à-dire sont séparés par des volumes d'absence complète de matière métallique, afin de conserver le caractère discontinu de la couche. Ces particules sont généralement des nanoparticules.

L'épaisseur nominale de la couche métallique discontinue est de préférence comprise dans un domaine allant de 0,2 à 4 nm. Cette épaisseur n'est pas celle mesurée dans les zones couvertes par la couche discontinue. Il s'agit au contraire de l'épaisseur qui serait obtenue si la couche métallique était continue, avec la même quantité de métal. La couche métallique discontinue est par conséquent d'une épaisseur nominale inférieure à l'épaisseur minimale requise pour déposer une couche complète continue.

L'épaisseur nominale de la couche métallique, qui influe sur la dimension des particules (ou amas ou îlots) métalliques, permet de régler la couleur en transmission obtenue. Des gammes d'épaisseurs préférées, notamment dans le cas de couches d'argent, sont les suivantes : 0,2 à 2 nm, 0,2 à 1 nm, 1 à 4 nm, 1 à 2 nm, 2 à 4 nm. Le dépôt par pulvérisation cathodique, en particulier assisté par champ magnétique (procédé dit magnétron) permet de régler finement ces épaisseurs et de réaliser des dépôts homogènes en termes d'épaisseur, et donc de couleur, y compris pour des articles de grande taille, par exemple ayant une surface supérieure à 1 m², voire 2 ou 3 m².

Lorsque la couche métallique discontinue est constituée d'argent et déposée directement en contact de la première feuille de verre, la couleur en transmission est bleue pour des épaisseurs nominales allant de 2 à 4 nm ; elle devient violette pour des épaisseurs nominales allant de 1 à 2 nm, puis rose pour des épaisseurs nominales en-dessous de 1 nm.

Selon un mode de réalisation préféré, la couche métallique discontinue est déposée directement en contact de la première feuille de verre.

Selon un mode de réalisation alternatif, mais moins préféré, la couche métallique discontinue est déposée en contact avec une sous-couche diélectrique. Cette sous-couche peut modifier la couleur obtenue en modifiant l'arrangement des particules métalliques. La sous-couche diélectrique est de préférence à base d'un matériau choisi parmi les oxydes, les nitrures et les oxynitrures, en particulier à base d'un matériau choisi parmi le nitrure de silicium, le nitrure d'aluminium, l'oxyde de titane, l'oxyde de niobium, l'oxyde de silicium, l'oxyde de zinc, les oxydes mixtes de zinc et d'étain, les oxydes mixtes d'indium et d'étain.

L'empilement de couches minces est de préférence constitué de deux, voire trois couches minces : une éventuelle sous-couche diélectrique, la couche métallique discontinue, et la surcouche diélectrique. Préférentiellement, l'empilement de couches minces est constitué de deux couches minces, par conséquent la couche métallique discontinue et la surcouche diélectrique.

La nature, et dans une moindre mesure, l'épaisseur de la surcouche diélectrique, permettent d'influer sur l'intensité de la couleur en transmission, en modifiant la forme des particules métalliques.

La surcouche diélectrique est de préférence à base d'un matériau choisi parmi les oxydes, les nitrures et les oxynitrures. Dans le cas des oxydes, la pulvérisation cathodique doit être non-réactive, de manière à éviter l'oxydation de la couche métallique. Par pulvérisation non-réactive, on entend que le gaz plasmagène ne contient pas d'oxygène, destiné à réagir avec les atomes arrachés de la cible pour former des oxydes ou des oxynitrures. On utilise alors des cibles céramiques, donc déjà sous la forme d'oxydes. Les surcouches en nitrures ne posent pas ces problèmes : le gaz plasmagène peut contenir de l'azote et la pulvérisation peut être réactive.

La surcouche diélectrique est avantageusement à base d'un matériau choisi parmi le nitrure de silicium, le nitrure d'aluminium, l'oxyde de titane, l'oxyde de niobium, l'oxyde de silicium, l'oxyde de zinc, les oxydes mixtes de zinc et d'étain, les oxydes mixtes d'indium et d'étain.

De manière très préférée, la surcouche diélectrique est à base de nitrure de silicium, notamment est essentiellement constituée de nitrure de silicium. Le nitrure de silicium est de préférence dopé avec de l'aluminium, car le dopage des cibles de silicium par de l'aluminium permet un dépôt par pulvérisation cathodique plus rapide. Les inventeurs ont pu observer que les surcouches à base de nitrure de silicium permettaient d'obtenir des couleurs plus intenses que d'autres surcouches.

L'épaisseur de la surcouche diélectrique permet également de faire varier l'intensité de la couleur en transmission. Cette épaisseur est de préférence comprise dans un domaine allant de 2 à 200 nm, notamment de 3 à 100 nm, voire de 4 à 50 nm et même de 5 à 30 nm.

Les différentes caractéristiques préférées qui précèdent peuvent être combinées entre elles, selon toutes les combinaisons physiquement possibles. Ces différentes combinaisons ne sont pas toutes énumérées dans un souci de concision. Une combinaison préférée est par exemple un article dans lequel l'empilement est constitué de deux couches, à savoir une couche métallique discontinue, constituée d'argent, présentant une épaisseur nominale allant de 0,2 à 4 nm, déposée directement et en contact avec la première feuille de verre, et une surcouche diélectrique essentiellement constituée de nitrure de silicium, dont l'épaisseur est de préférence comprise entre 5 et 30 nm.

L'étape de feuilletage peut être réalisée de manière connue par un traitement en autoclave, par exemple à des températures de 110 à 160°C et sous une pression allant de 10 à 15 bars. Préalablement au traitement en autoclave, l'air emprisonné entre les feuilles de verre et l'intercalaire de feuilletage peut être éliminé par calandrage ou par dépression.

Selon les dimensions souhaitées, au moins une étape de découpe peut être réalisée avant ou après l'étape de feuilletage.

L'article en verre feuilleté selon l'invention peut être par exemple un plateau de table, notamment de table basse. Il peut également être un élément de porte vitrée ou de cloison vitrée. D'autres applications sont bien évidemment possibles, que ce soit dans le domaine du bâtiment ou des transports.

Le facteur de transmission lumineuse de l'article en verre feuilleté au sens de la norme EN 410-2011 est avantageusement compris entre 45 et 70%. Le facteur de réflexion lumineuse de l'article en verre feuilleté au sens de la norme EN 410-2011 est avantageusement compris entre 7 et 20%.

Les exemples qui suivent illustrent l'invention de manière non-limitative.

Une feuille de verre clair de 4 mm d'épaisseur, commercialisé sous la référence Planiclear par la demanderesse, a été revêtue par pulvérisation cathodique d'un revêtement de couches minces constitué de deux couches, d'abord une couche discontinue d'argent de 0,4 nm d'épaisseur nominale, puis une surcouche de nitrure de silicium (dopé à l'aluminium) de 30 nm d'épaisseur.

Les coordonnées colorimétriques en transmission sont a* = 12,6 et b* = -4,7. En réflexion côté couche, a* vaut - 8,3 et b* vaut 7,6. Côté verre, la couleur en réflexion est très différente, puisque a* vaut 1,0 et b* vaut 10,5. La teinte en réflexion est donc à la fois très soutenue et très dépendante du côté d'observation.

La feuille de verre ainsi revêtue a ensuite été feuilletée de manière connue à une autre feuille de verre clair identique, mais non revêtue, le revêtement de couches minces étant disposé contre l'intercalaire de feuilletage en PVB.

Les coordonnées colorimétriques en transmission sont a* = 10,0 et b* = -2,6. Les coordonnées en réflexion sont de (-3,1 ; 2,0) et (-3,3 ; 2,4) selon le côté d'observation. La teinte en réflexion est donc peu soutenue et symétrique.

Selon d'autres exemples, la couche discontinue d'argent avait une épaisseur nominale de 2 nm, et la surcouche était de l'oxyde de titane de 5 nm et 10 nm d'épaisseur. La teinte en transmission était bleue, et la teinte en réflexion à la fois peu soutenue et symétrique.

## Revendications

1. Article en verre feuilleté transparent coloré comprenant une première feuille de verre liée adhésivement à une deuxième feuille de verre au moyen d'un intercalaire de feuilletage, ladite première feuille de verre étant revêtue sur sa face en contact avec ledit intercalaire de feuilletage d'un seul empilement de couches minces, ledit empilement comprenant, successivement depuis ladite face, une couche métallique discontinue à base d'argent ou à base d'aluminium puis, en contact avec ladite couche métallique discontinue, une surcouche diélectrique.

2. Article en verre feuilleté selon la revendication 1, dans lequel l'empilement ne comprend qu'une seule couche métallique.

3. Article en verre feuilleté selon l'une des revendications précédentes, dans lequel l'empilement de couches minces est déposé par pulvérisation cathodique.

4. Article en verre feuilleté selon l'une des revendications précédentes, dans lequel la couche métallique discontinue est constituée d'argent.

5. Article en verre feuilleté selon l'une des revendications précédentes, dans lequel la couche métallique discontinue recouvre entre 50% et 90% de la surface sur laquelle elle est déposée.

6. Article en verre feuilleté selon l'une des revendications précédentes, dans lequel la couche métallique discontinue se présente sous la forme de particules, notamment de nanoparticules, isolées ou connectées entre elles.

7. Article en verre feuilleté selon l'une des revendications précédentes, dans lequel l'épaisseur nominale de la couche métallique discontinue est comprise dans un domaine allant de 0,2 à 4 nm.

8. Article en verre feuilleté selon l'une des revendications précédentes, dans lequel la couche métallique discontinue est déposée directement en contact de la première feuille de verre.

9. Article en verre feuilleté selon l'une des revendications précédentes, dans lequel l'empilement de couches minces est constitué de deux ou trois couches minces.

10. Article en verre feuilleté selon l'une des revendications précédentes, dans lequel la surcouche diélectrique est à base d'un matériau choisi parmi les oxydes, les nitrures et les oxynitrures, notamment d'un matériau choisi parmi le nitrure de silicium, le nitrure d'aluminium, l'oxyde de titane, l'oxyde de niobium, l'oxyde de silicium, l'oxyde de zinc, les oxydes mixtes de zinc et d'étain, les oxydes mixtes d'indium et d'étain.

11. Article en verre feuilleté selon la revendication précédente, dans lequel la surcouche diélectrique est à base de nitrure de silicium.

12. Article en verre feuilleté selon l'une des revendications précédentes, dans lequel les feuilles de verre et l'intercalaire de feuilletage sont incolores.

13. Article en verre feuilleté selon l'une des revendications précédentes, qui est un plateau de table, ou qui est un élément de porte vitrée ou de cloison vitrée.

14. Procédé d'obtention d'un article en verre feuilleté transparent coloré selon l'une des revendications précédentes, comprenant les étapes successives suivantes :
- la fourniture d'une première feuille de verre dont une face est revêtue d'un seul empilement de couches minces, ledit empilement comprenant, successivement depuis ladite face, une couche métallique discontinue à base d'argent ou à base d'aluminium puis, en contact avec ladite couche métallique discontinue, une surcouche diélectrique, puis
- une étape de feuilletage, dans laquelle la première feuille de verre est liée adhésivement à une deuxième feuille de verre au moyen d'un intercalaire de feuilletage, de sorte que ledit empilement de couches minces soit en contact avec ledit intercalaire de feuilletage.

15. Procédé selon la revendication précédente, comprenant en préalable une étape de dépôt par pulvérisation cathodique dudit empilement de couches minces sur un substrat de verre, puis optionnellement une étape de découpe dudit substrat, afin d'obtenir la première feuille de verre.

## Patentansprüche

1. Artikel aus farbigem, transparentem Verbundglas, umfassend eine erste Glasscheibe, die mittels einer Verbundzwischenlage mit einer zweiten Glasscheibe haftend verbunden ist, wobei die erste Glasscheibe auf ihrer mit der Verbundzwischenlage in Kontakt stehenden Seite mit einem einzigen Dünnschichtstapel beschichtet ist, der Stapel umfassend aufeinanderfolgend von der Seite aus eine diskontinuierliche Metallschicht auf Silberbasis oder auf Aluminiumbasis, dann, in Kontakt mit der diskontinuierlichen Metallschicht, eine dielektrische Deckschicht.

2. Verbundglasartikel nach Anspruch 1, wobei der Stapel nur eine einzige Metallschicht umfasst.

3. Verbundglasartikel nach einem der vorstehenden Ansprüche, wobei der Dünnschichtstapel durch Kathodenzerstäubung aufgebracht wird.

4. Verbundglasartikel nach einem der vorstehenden Ansprüche, wobei die diskontinuierliche Metallschicht aus Silber besteht.

5. Verbundglasartikel nach einem der vorstehenden Ansprüche, wobei die diskontinuierliche Metallschicht zwischen 50 % und 90 % der Oberfläche, auf der sie aufgebracht ist, bedeckt.

6. Verbundglasartikel nach einem der vorstehenden Ansprüche, wobei die diskontinuierliche Metallschicht in Form von Partikeln, insbesondere Nanopartikeln, die vereinzelt oder miteinander verbunden sind, vorliegt.

7. Verbundglasartikel nach einem der vorstehenden Ansprüche, wobei die Nenndicke der diskontinuierlichen Metallschicht in einem Bereich von 0,2 bis 4 nm liegt.

8. Verbundglasartikel nach einem der vorstehenden Ansprüche, wobei die diskontinuierliche Metallschicht direkt in Kontakt mit der ersten Glasscheibe aufgebracht wird.

9. Verbundglasartikel nach einem der vorstehenden Ansprüche, wobei der Dünnschichtstapel aus zwei oder drei Dünnschichten besteht.

10. Verbundglasartikel nach einem der vorstehenden Ansprüche, wobei die dielektrische Deckschicht auf einem Material, das aus Oxiden, Nitriden und Oxynitriden ausgewählt ist, insbesondere auf einem Material basiert, das aus Siliciumnitrid, Aluminiumnitrid, Titanoxid, Nioboxid, Siliciumoxid, Zinkoxid, Mischoxiden aus Zink und Zinn, Mischoxiden aus Indium und Zinn ausgewählt ist.

11. Verbundglasartikel nach dem vorstehenden Anspruch, wobei die dielektrische Deckschicht auf Siliciumnitrid basiert.

12. Verbundglasartikel nach einem der vorstehenden Ansprüche, wobei die Glasscheiben und die Verbundzwischenlage farblos sind.

13. Verbundglasartikel nach einem der vorstehenden Ansprüche, der eine Tischplatte ist oder der ein Element einer Glastür oder einer Glastrennwand ist.

14. Verfahren zum Herstellen eines Artikels aus transparentem, gefärbtem Verbundglas nach einem der vorstehenden Ansprüche, umfassend die folgenden aufeinanderfolgenden Schritte:
- Bereitstellen einer ersten Glasscheibe, deren eine Seite mit einem einzigen Dünnschichtstapel beschichtet ist, der Stapel umfassend aufeinanderfolgend von der einen Seite aus eine diskontinuierliche Metallschicht auf Silberbasis oder auf Aluminiumbasis, dann, in Kontakt mit der diskontinuierlichen Metallschicht, eine dielektrische Deckschicht, dann
- einen Laminierschritt, wobei die erste Glasscheibe mittels einer Verbundzwischenlage mit einer zweiten Glasscheibe haftend verbunden wird, sodass der Dünnschichtstapel mit der Verbundzwischenlage in Kontakt steht.

15. Verfahren nach dem vorstehenden Anspruch, umfassend zunächst einen Schritt des Aufbringens des Dünnschichtstapels auf ein Glassubstrat durch Kathodenzerstäubung, dann optional einen Schritt des Schneidens des Substrats, um die erste Glasscheibe zu erhalten.

## Claims

1. A colored, transparent laminated glass article comprising a first glass sheet adhesively bonded to a second glass sheet by means of a lamination interlayer, said first glass sheet being coated, on the surface thereof that is in contact with said lamination interlayer, with a single stack of thin layers, said stack comprising, successively from said surface, a silver-based or aluminum-based discontinuous metallic layer then, in contact with said discontinuous metallic layer, a dielectric overlayer.

2. The laminated glass article according to claim 1, wherein the stack only comprises a single metallic layer.

3. The laminated glass article according to one of the preceding claims, wherein the stack of thin layers is deposited by cathode sputtering.

4. The laminated glass article according to one of the preceding claims, wherein the discontinuous metallic layer consists of silver.

5. The laminated glass article according to one of the preceding claims, wherein the discontinuous metallic layer covers 50% to 90% of the surface whereupon it is deposited.

6. The laminated glass article according to one of the preceding claims, wherein the discontinuous metallic layer is presented in the form of particles, particularly of nanoparticles, isolated or connected to one another.

7. The laminated glass article according to one of the preceding claims, wherein the nominal thickness of the discontinuous metallic layer is comprised in a range from 0.2 to 4 nm.

8. The laminated glass article according to one of the preceding claims, wherein the discontinuous metallic layer is deposited directly in contact with the first glass sheet.

9. The laminated glass article according to one of the preceding claims, wherein the stack of thin layers consists of two or three thin layers.

10. The laminated glass article according to one of the preceding claims, wherein the dielectric overlayer is based on a material selected from oxides, nitrides and oxynitrides, particularly on a material selected from silicon nitride, aluminum nitride, titanium oxide, niobium oxide, silicon oxide, zinc oxide, mixed oxides of zinc and tin, mixed oxides of indium and tin.

11. The laminated glass article according to the preceding claim, wherein the dielectric overlayer is based on silicon nitride.

12. The laminated glass article according to one of the preceding claims, wherein the glass sheets and the lamination interlayer are colorless.

13. The laminated glass article according to one of the preceding claims, which is a table top, or which is an element of a glass door or a glass partition.

14. A method for obtaining a colored, transparent laminated glass article according to one of the preceding claims, comprising the following successive steps:
- providing a first glass sheet of which one surface is coated with a single stack of thin layers, said stack comprising, successively from said surface, a silver-based or aluminum-based discontinuous metallic layer then, in contact with said discontinuous metallic layer, a dielectric overlayer, then
- a lamination step, wherein the first glass sheet is adhesively bonded to a second glass sheet by means of a lamination interlayer, so that said stack of thin layers is in contact with said lamination interlayer.

15. The method according to the preceding claim, comprising a prior step of depositing said stack of thin layers by cathode sputtering on a glass substrate, then optionally a step of cutting said substrate, in order to obtain the first glass sheet.
